Europäisches Patentamt

European Patent Office

Office européen des brevets

(19)

(11) Numéro de publication : **0 446 338 B1**

## (12) FASCICULE DE BREVET EUROPEEN

(45) Date de publication du fascicule du brevet :
**14.07.93 Bulletin 93/28**

(51) Int. Cl.$^5$ : **B60G 11/32,** B60G 17/00, B60G 15/06

(21) Numéro de dépôt : **90915318.1**

(22) Date de dépôt : **05.10.90**

(86) Numéro de dépôt international :
**PCT/FR90/00715**

(87) Numéro de publication internationale :
**WO 91/04876 18.04.91 Gazette 91/09**

(54) **PROCEDE DE SUSPENSION DE ROUE DE VEHICULE.**

(30) Priorité : **05.10.89 FR 8913240**

(43) Date de publication de la demande :
**18.09.91 Bulletin 91/38**

(45) Mention de la délivrance du brevet :
**14.07.93 Bulletin 93/28**

(84) Etats contractants désignés :
**AT BE CH DE DK ES FR GB IT LI LU NL SE**

(56) Documents cités :
BE-A- 522 734
DE-A- 2 043 512
DE-A- 3 410 473
FR-A- 809 336
FR-A- 1 212 305
FR-A- 1 349 851

(56) Documents cités :
FR-E- 23 055
GB-A- 349 582
GB-A- 485 935
GB-A- 1 401 988
US-A- 3 559 976

(73) Titulaire : **MAURO BIANCHI S.A.**
**12 bis, rue des Pavillons**
**F-92800 Puteaux (FR)**

(72) Inventeur : **BIANCHI, Mauro**
**La Boudrague Chemin de la Cour**
**F-83310 La Garde-Freinet (FR)**

(74) Mandataire : **Hautier, Jean-Louis**
**Cabinet Hautier Office Méditerranéen de**
**Brevets d'Invention et de Marques 24 rue**
**Masséna**
**F-06000 Nice (FR)**

EP 0 446 338 B1

Jouve, 18, rue Saint-Denis, 75001 PARIS

## Description

L'invention a pour objet une suspension à flexibilité ou raideur variable en dynamique et dont la flexibilité est augmentée dans la zone d'enfoncement des roues jusqu'à la position butée de choc, et dont la raideur est augmentée de la zone normale en ordre de marche jusqu'à la position roue pendante (ou butée de détente).

L'état de la technique peut être défini par différents brevets. Tous ces brevets décrivent des moyens pour faire varier la flexibilité ou la raideur en fonction de la charge du véhicule. D'autres brevets décrivent des correcteurs d'assiette. Ces brevets font intervenir, grâce à de l'énergie, un mécanisme qui modifie la raideur ou la flexibilité en fonction de la charge. Certains brevets modifient la raideur ou la flexibilité en fonction du choix de la conduite adoptée (exemple : conduite sportive, conduite familiale, etc...). Par apport d'énergie, la flexibilité des éléments élastiques peut varier en fonction des capteurs (direction, assiette, vitesse, etc...). Le changement de flexibilité ou de raideur s'applique sur toute la course de la suspension.

Dans la très grande majorité des cas, les suspensions des automobiles sont constituées d'un combiné "ressort + amortisseur" engendrant, au niveau de la roue du véhicule, un effort de sustentation qui croît de façon constante avec l'écrasement de la suspension. En d'autres termes, la raideur ou flexibilité est constante (raideur = delta F sur delta L ou variation d'effort sur variation de longueur), ceci quelle que soit la nature du ressort utilisé (l'élément élastique pouvant être un ressort métallique hélicoïdal, de torsion à lame (s) ou pneumatique, etc...).

Il existe malgré tout des suspensions dans lesquelles cette raideur varie volontairement avec le débattement de la roue du véhicule. Ces suspensions sont dites à flexibilité variable et toutes celles connues à ce jour font appel à un accroissement de la raideur, lorsqu'on augmente la charge sur la roue du véhicule ; cette augmentation de raideur est destinée à mieux maîtriser le maintien de la masse "augmentée" du véhicule. Elle peut être obtenue de plusieurs façons :

- sur le plus ancien des systèmes (ressort à lames), la courbure des lames peut être adaptée pour que celles-ci entrent en action progressivement.
- sur un ressort hélicoïdal, dans le même esprit, le pas des spires peut être progressif pour que celles-ci deviennent jointives l'une après l'autre lors de l'écrasement.
- sur un ressort hélicoïdal, on peut aussi avoir des zones différentes avec chacune un pas constant, mais de valeur différente. La première partie vient à spires jointives, tandis que seule la seconde partie continue de se comprimer ; ceci engendre deux raideurs successives, la plus grande étant en fin d'écrasement.
- par le biais d'une cinématique, on peut aussi faire varier la raideur au niveau de la roue en faisant varier le rapport de multiplication par rapport au ressort.
- dans une suspension oléo-pneumatique, le volume gazeux diminue dans l'accu de l'élément entraînant une variation de ce volume de plus en plus violente, d'où une raideur qui augmente.

Dans ces différents exemples de solutions très connues, la raideur augmente toujours avec l'écrasement de la suspension. Cette augmentation de raideur est, la plupart du temps, progressive.

L'état de la technique peut être défini par les brevets suivants :

FR-A-1.349.851 : Suspension d'un engin mobile correspondant au préambule de la revendication 1 comportant un ou plusieurs éléments à moyens déformables usuels, tels ressorts ou autres dispositifs éventuellement complexes et amortis, travaillant soit par contractions, soit par extensions ou torsions de leurs fibres, matières ou fluides élastiques, agencés de telle manière :

que leurs élongations et charges correspondantes puissent être différenciées de celles des détentes subséquentes, voire prédéterminées dans les limites de charges définies ou au-dessus d'une surcharge occasionnelle prédéterminée ;

que l'agencement en liaison de ces éléments élastiques permette à tout obstacle, survenant sous l'un de ces éléments, de provoquer l'arésonance de l'engin sous cet obstacle et de bénéficier de la flexibilité de plusieurs, voire de l'ensemble de ces éléments, que ces réglages et liaisons puissent être maintenus dans les limites définies d'une surcharge ou d'une décharge au repos données, voire d'une garde constante au sol (ou au plan de déplacement) de cet engin.

Ce brevet axe tous ses efforts sur la recherche de l'arésonance. Rien n'est décrit ni suggéré quant à la valeur des différentes zones de raideurs.

US-A-3.559.976 : Ce brevet décrit un assemblage de plusieurs ressorts permettant d'obtenir plusieurs raideurs. Les ressorts sont montés en série et travaillent dans le même sens. Au-delà d'une certaine course lors de l'accroissement de la charge, un des ressorts est éliminé.

Ce fonctionnement est radicalement contraire à celui du procédé selon l'invention.

FR-A-1.212.305 : Perfectionnements aux amortisseurs notamment caractérisés par l'utilisation de deux ressorts, l'un de support, l'autre de réaction, et tels que la caractéristique de l'ensemble ne soit pas linéaire, la résistance aux vibrations augmentant comme l'amplitude de celles-ci. Quand la charge est appliquée, il est essentiel que le ressort antagoniste soit à l'état de non-compression, mais dans une condition telle qu'il puisse opposer une résistance croissante à la flexion dynamique, consécutivement à l'action des forces vibratoires qui le compriment.

La notion d'arésonance semble capitale dans ce montage destiné non pas à une suspension de véhicule, mais à des tampons élastiques de maintien de compresseurs ou mécanismes de machines fixes, où les mouvements à absorber sont à fréquence fixe ou progressivement variable. La raideur augmente donc rapidement et symétriquement autour du point d'équilibre statique, de façon à "museler" toute mise en excitation entretenue des déplacements de masse (pouvant être, par exemple, le balourd dû au mauvais chargement d'une machine à laver)

FR-A-809.336 : Suspension à torsion, en particulier pour demi-essieux oscillants, caractérisée par une ou plusieurs des particularités ci-après, prises séparément ou en combinaison :

1° Une partie de la longueur de la barre-ressort peut être mise hors de service, le restant de la longueur seul agissant comme ressort;

2° En un point approprié de la barre de torsion est fixé un bras qui, lors de la torsion, prend appui sur une butée, dont la position par rapport au bras peut être modifiée à volonté ;

3° La butée est établie sous forme de disque tournant, non circulaire, sur la périphérie duquel vient prendre appui le bras de la barre de torsion ;

4° Sur la périphérie du disque sont prévus des gradins déterminant les diverses positions de rotation du bras de la barre de torsion.

Le fonctionnement est radicalement opposé à celui de la suspension selon l'invention puisqu'il s'agit encore du principe classique de l'augmentation de raideur mise en oeuvre lors de l'accroissement de la charge du véhicule (principe de la classique suspension à flexibilité variable).

BE-A-522.734 : La nouveauté de l'invention consiste en ce que la chambre ou espace à basse pression est placée au-dessus du piston de l'amortisseur et en ce que la chambre de compensation commence directement au-dessus du niveau ou plan d'huile. Conformément à cette disposition, l'espace à haute pression est situé au-dessous du piston et est limité vers le bas par le guidage et la garniture d'étanchéité de la tige du piston. De la sorte, on obtient, en contraste avec les systèmes d'amortisseurs hydrauliques connus, que l'espace à haute pression en cas de petites pertes de liquide d'amortisseur qui sinon dérangent immédiatement le fonctionnement, n'est pas influencé par ces pertes, par exemple d'huile, et de ce fait la course de haute pression en tant que fonction principale d'un amortisseur conserve sa pleine capacité de travail même en cas de pertes d'huile.

Il s'agit avant tout d'un amortisseur de suspension de motocyclette. En complément de la fonction d'amortissement (purement hydraulique), un ressort installé autour de la partie amortisseur a été remplacé par deux ressorts de raideur différente, de façon à obtenir une "dureté croissante" pour éviter des aplatissements de la suspension. Il s'agit donc de la "classique suspension à flexibilité variable". Un petit ressort, placé dans l'amortisseur lui-même, est destiné à amortir la fin de la course d'extension.

DE-A-2.043.512 : Système élastique pour véhicules automobiles, avec des ressorts, disposés les uns derrière les autres, supportant la carroserie, et avec un dispositif de blocage pour le blocage d'un ou de plusieurs ressorts par rapport à la carrosserie, un capteur mesurant la vitesse d'oscillation de la masse de la carrosserie étant prévu pour actionner le dispositif de blocage, qui "ouvre" périodiquement le dispositif de blocage lorsque la vitesse d'oscillation atteint la valeur zéro (point d'inversion de l'oscillation) et le ferme après une demi-oscillation de deux ressorts entre lesquels s'exerce l'action du dispositif de blocage (selon la demande de brevet P.1928 961.3), caractérisé par le fait que les parties hydrauliques des ressorts réalisées sous la forme d'éléments élastiques hydropneumatiques sont réunis par des liaisons hydrauliques et que le dispositif de blocage comprend une combinaison de soupapes pour bloquer ou libérer la circulation du liquide, ou bien un piston blocable flottant librement dans la chambre sous pression de la partie hydraulique.

Les éléments élastiques (hydropneumatiques) ne sont pas montés en opposition, mais "disposés" l'un derrière l'autre" (ou en parallèle). Il y a changement de raideur par neutralisation d'un des éléments élastiques sur information d'un capteur mesurant la vitesse d'oscillation de la carrosserie.

Un aspect de la suspension selon les revendications réside dans le fait que c'est au voisinage de la position en ordre de marche de la suspension que la raideur est maximale ; plus précisément, sur toute la course allant de la position "roues pendantes" au voisinage de la position en ordre de marche. Cette raideur maximale permet, comme sur les véhicules de sport et de compétition, une très bonne maîtrise de l'assiette du véhicule, tandis qu'il est soumis aux accélérations longitudinales et transversales engendrées horizontalement lors des freinages, accélérations et virages. Mais, contrairement aux véhicules sportifs, le procédé de la présente invention permet ce résultat sans que cela soit obtenu au prix d'une dégradation du confort, car, lors du passage de la roue sur une saillie du revêtement routier, la suspension est comprimée sur la portion de course où la raideur est plus faible. Les courbes représentées sur les figures jointes expriment la différence fondamentale du profil de raideur du système par rapport à tous les systèmes connus.

La raideur la plus élevée, se situant entre la position en ordre de marche" et la position "roues pendantes", doit être d'une valeur au moins trois fois supérieure à celle de la raideur observée lors de l'enfoncement de la roue jusqu'à la butée de choc.

Dans le cas préférable d'un élément élastique unique, on utilise une butée/coupelle à un endroit précis dudit ressort, de manière à obtenir une courbe de raideur à double pente. La ou les butées sont mises en contact pour une assiette voisine de l'assiette en charge du véhicule, ceci de manière à ce que, partant de cette position, on décolle les butées et on sollicite la totalité (R20+R30) du ressort hélicoïdal lors de l'enfoncement total de la suspension ; tandis qu'en course de détente, la présence d'une butée limite le fonctionnement sur la portion réduite dudit ressort hélicoïdal.

Dans le cas préférable de l'utilisation d'un ressort unique, une coupelle d'appui est fixée au niveau de spires centrales du ressort, ce qui permet de distinguer la partie supérieure (R30) du ressort au-dessus de la coupelle et l'autre partie (R20) de ce même ressort au-dessous de la coupelle. La partie (R30) du ressort est enfermée dans une chambre et sous contrainte entre deux appuis, tous deux solidaires du châssis du véhicule. La partie (R20) du même ressort est positionnée entre la coupelle et une autre coupelle solidaire du corps d'amortisseur, lui-même solidaire à l'extrémité de l'amortisseur de la roue du véhicule. Cette partie (R20) du ressort assure la sustentation du véhicule en recevant la poussée de la roue et en s'appuyant sur la coupelle tenue en place par la poussée engendrée par la compression de la partie (R30) du ressort. Cette dernière compression étant supérieure à celle de la partie (R20) lorsque le véhicule est naturellement sur ses roues.

Dans le cas préférable où l'élément élastique est une barre de torsion, celle-ci comporte une butée solidaire (B1) de ladite barre de torsion qui est mise en contact avec une butée (B2) solidaire du châssis et ce de manière à ce que, si on comprime la suspension, les deux butées (B1, B2) se désolidarisent, d'où, sollicitation de la barre de torsion sur la totalité de sa longueur (L1). Si on déleste la suspension, les deux butées (B1, B2) restent en contact et la barre de torsion ne se détend que sur une partie de sa longueur (L2).

La position de la butée (B2) sur châssis est préférablement asservie à la charge du véhicule, ce qui garantit le positionnement optimum du point d'inflexion des raideurs par rapport à l'assiette du véhicule roulant quel que soit son état de charge.

Dans le cas préférable où l'élément élastique est un unique ressort à lames, celui-ci comporte au moins une butée (B3) placée de manière à s'opposer à la détente du ressort à lames, de manière à obtenir une courbe de raideur à double pente ; la ou les butées (B3) sont mises en contact pour une assiette voisine de l'assiette en charge du véhicule, ceci de manière à ce que, partant de cette position, on décolle les butées (B3) et on sollicite la totalité (L1) du ressort à lames lors de l'enfoncement total de la suspension, tandis qu'en course de détente, la présence d'une ou de plusieurs butées limite le fonctionnement sur la portion réduite (L2) dudit ressort à lames.

La suspension selon l'invention comporte préférablement un vérin à double effet dont la chambre supérieure est connectée à une sphère principale de suspension et la chambre inférieure est connectée à une sphère antagoniste. Une électrovanne permet de faire entrer en action, ou pas, la sphère connectée à la partie inférieure du vérin. Ladite sphère engendre un effort antagoniste à celui de la sphère principale qui assure la sustentation du véhicule.

L'électrovanne est préférablement pilotée en fonction de différents paramètres saisis dans le fonctionnement du véhicule. Ceci se traduit par la maîtrise permanente de la pression dans la chambre inférieure du vérin.

Un des modes de réalisation fait appel à deux éléments élastiques en opposition l'un sur l'autre et dont la composition des flexibilités donne naissance, au niveau de la suspension du véhicule, à un courbe de flexibilité à deux pentes. C'est le principe de ces deux pentes qui fait l'originalité du système et qui revêt un caractère novateur par rapport à quelques systèmes de suspension connus et utilisés à ce jour. Alors que quelques systèmes, lorsqu'ils font appel à une variation de flexibilité, présentent une raideur de suspension qui augmente dans le sens de l'écrasement de la suspension, le procédé de suspension selon l'invention présente une raideur maximale lors de la course de la roue qui se situe de la position "roue pendante" à la position en ordre de marche ; cette raideur chute sensiblement lorsque la roue du véhicule est amenée de "cette position en charge" à la position comprimée jusqu'aux butées de choc.

Les dessins ci-joints sont donnés à titre d'exemples indicatifs et non limitatifs. Ils représentent un mode de réalisation préféré selon l'invention. Ils permettront de comprendre aisément l'invention.

La figure 1 représente schématiquement la caractéristique d'un ressort avec une courbe (effort de compression - longueur).

La figure 2 est une vue de ces deux ressorts opposés libres et de deux ressorts montés en opposition et en précontrainte.

La figure 3 est une vue de deux ressorts ou éléments élastiques en opposition l'un sur l'autre et en précontrainte.

La figure 4 est une vue d'un graphique représentant l'assemblage des deux courbes (l'une d'elles renversée) des deux ressorts l'un sur l'autre.

La figure 5 est une vue de la courbe de raideur à deux pentes selon l'invention.

La figure 6 est une vue d'une courbe de la suspension selon l'invention transposée avec, en abscisse, l'effort de compression et, en ordonnée, la position des butées de choc 4 et des butées de détente 5.

La figure 7 met en évidence le déplacement du point d'inflexion B1 en fonction des réglages de mise au point de la suspension, pour que ce point d'inflexion B soit au-dessus ou en-dessous de la position en charge du véhicule.

La figure 8 est une vue d'un exemple de réalisation avec deux ressorts installés concentriquement autour de l'amortisseur.

La figure 9 est un autre mode de réalisation de la suspension avec un seul ressort (hélicoïdal) et ses appuis.

La figure 10 est une vue d'un exemple de réalisation avec une barre de torsion.

La figure 11 est une vue d'un mode de réalisation selon l'invention appliqué à un ressort à lames. Le ressort représenté est un demi-ressort actuel.

La figure 12 est un autre mode de réalisation selon l'invention, avec un ressort à lames représenté en entier avec deux butées.

La figure 13 est une vue de la suspension selon l'invention, adaptée à une suspension hydraulique.

La figure 14 est une vue de la suspension selon l'invention où le ressort, ou élément élastique, unique a été remplacé par deux ressorts en série, la suspension a un point de fixation par un oeil, et l'autre point de fixation par un goujon monté silentbloc.

La figure 15 est une vue de la suspension selon l'invention où le ressort, ou élément unique, a été remplacé par deux ressorts en série, ladite suspension a ses deux points de fixation qui se terminent par un oeil.

La figure 16 est une application de la suspension de roue selon l'invention, à une suspension du type Mac PHERSON (marque déposée).

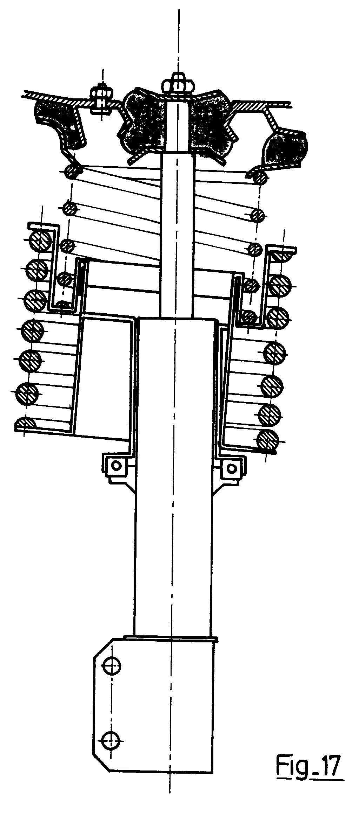

La figure 17 est une variante de l'application du procédé de suspension pour une suspension du type Mac PHERSON (marque déposée).

Pour décrire le fonctionnement de la suspension contractive selon l'invention, on commencera par l'analyse du système à deux ressorts antagonistes.

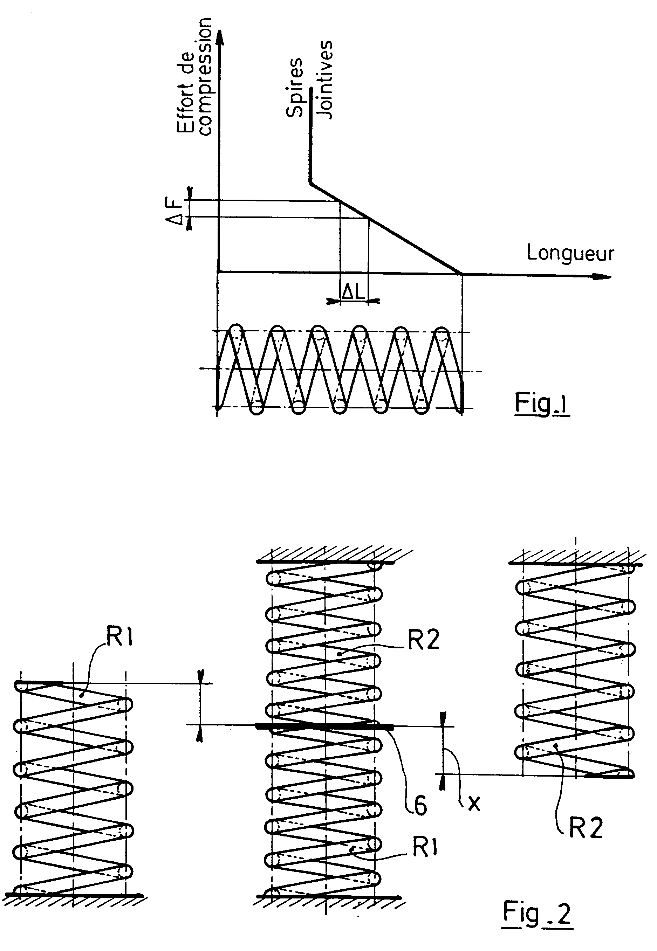

## RAPPEL DU PRINCIPE DE FONCTIONNEMENT AVEC DEUX RESSORTS MONTES EN OPPOSITION (voir les figures 1 et 2) :

Imaginons deux ressorts R1, R2 en précontrainte l'un sur l'autre maintenus entre deux appuis.

Pour faciliter la compréhension, les deux ressorts R1, R2 sont identiques et représentés à l'état libre de part et d'autre.

Si nous sollicitons le point de contact 6 vers le haut ou vers le bas, on comprime un ressort tandis qu'on décomprime l'autre. Sur le ressort comprimé, l'effort qui s'oppose au déplacement augmente tandis que sur l'autre ressort, l'effort qui aide au déplacement diminue. Cela se traduit par deux variations d'effort qui s'ajoutent au même titre que si l'on comprimait les deux ressorts R1, R2 ensemble. On additionne donc les deux raideurs.

Au delà de la course $\underline{x}$, le ressort qui se décomprimait atteint son état libre et la poussée de celui-ci (qui s'ajoutait à l'effort au point 6) s'estompe. On sollicite, à partir de cet instant, un seul ressort donc une seule raideur ; d'où le point de basculement de la courbe globale dans le sens d'une plus grande flexibilité.

I - On examine d'abord la caractéristique d'un ressort hélicoïdal classique à raideur constante (Figure 1). On observe une pente de raideur constante entre l'état libre et le blocage à spires jointives.

$$\text{Flexibilité} = \frac{\Delta L}{\Delta F} \qquad \text{Raideur} = \frac{\Delta F}{\Delta L}$$

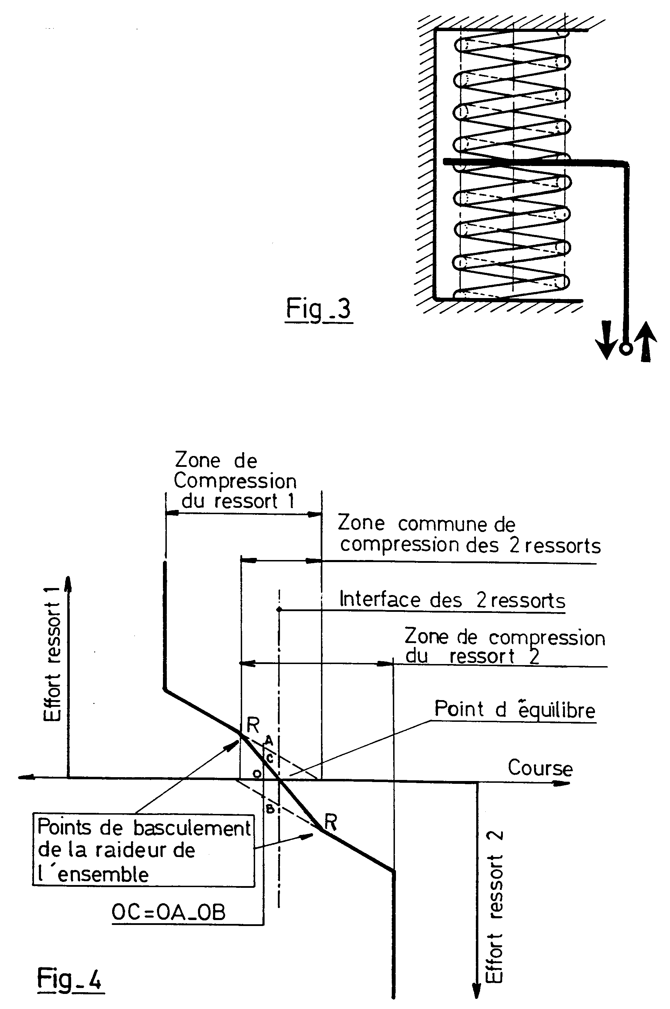

II - On installe deux ressorts en opposition l'un sur l'autre et en précontrainte (fig.3) et on imagine le bras de suspension solidaire de l'interface des deux ressorts (eux-mêmes en appui sur le châssis par leur extrêmité fixe). Ceci est traduit graphiquement en assemblant en opposition (l'une d'elle renversée) les deux caractéristiques des ressorts en appui l'un sur l'autre (fig.4).

On observe deux valeurs de raideur :
- une forte raideur tant que les deux ressorts sont sous contrainte (somme des deux raideurs des ressorts)
- une raideur plus faible lorsqu'un des ressorts atteint son état libre (raideur d'un seul ressort).

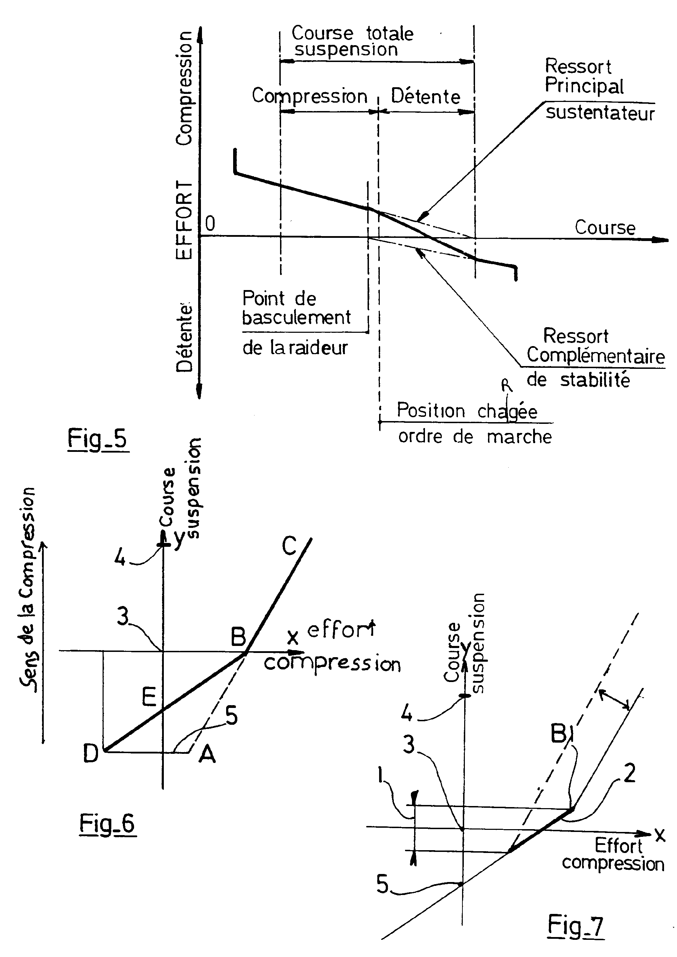

III - En adaptant les caractéristiques respectives de chacun des ressorts et en positionnant les courses d'utilisation d'une façon adéquate, on obtient la courbe de raideur à deux pentes qui caractérise la suspension selon l'invention (fig. 5).

Il ne reste plus qu'à faire varier l'expression de ce dernier graphique de la figure 5 pour obtenir la caractéristique de la suspension (fig. 6), comparativement aux solutions classiques.

Il est important de noter que le fonctionnement de la suspension selon l'invention n'a rien de commun avec tous les procédés de suspension faisant appel à une correction d'assiette. Aucune énergie n'est mise en oeuvre lors du changement de la charge du véhicule à l'arrêt. Le procédé selon l'invention réside uniquement dans l'utilisation, en dynamique, de deux raideurs différentes et localisées lors des débattements de la suspension du véhicule.

Dans des variantes de réalisation du procédé, on peut envisager un ajustement du point de basculement de la courbe de raideur par rapport à la charge du véhicule.

La distinction avec certains systèmes à correction d'assiette faisant appel à des pressions de fluide en opposition réside dans le fait que, sur ces derniers, c'est au prix d'une correction lente que la raideur globale (et résiduelle des deux raideurs antagonistes) de la suspension évoluee, le changement de raideur s'appliquant sur toute la course de suspension et en fonction de la charge du véhicule.

Le principe des deux raideurs de suspension ou courbe de flexibilité à deux pentes est illustré sur la courbe représentée à la figure 6.

a) Sur ce graphique, le profil d'une suspension classique est matérialisé par la courbe droite A,B,C (en pointillés de B à A). La variation de charge est constante autrement dit flexibilité (ou raideur) constante. Le plus souvent, une précontrainte du ressort existe déjà en position butée de détente 5. Si le véhicule décolle sur une bosse, la suspension pourra éventuellement se détendre jusqu'à percuter les butées de détente et la poussée de l'élément élastique (ou ressort) sera présente pendant la totalité de la course de détente.

b) Sur la courbe de B à C, la raideur de la suspension est identique à celle d'un véhicule classique. Le passage d'une bosse s'opère sensiblement dans les mêmes conditions de confort. Par contre, la raideur est sensiblement plus élevée sur la course de détente D,E,B. Non seulement il n'est pas observé de précontrainte en position roue pendante, mais, au contraire, un effort de sens inversé est nécessaire pour amener la suspension jusqu'aux butées de détente 5. Si le véhicule décolle sur une bosse, la poussée de l'élément élastique (ou plutôt de l'ensemble des éléments élastiques) ne sera présente que sur une partie de la course de détente (de B à E). A partir du point E, la roue du véhicule, au lieu de percuter une butée de retenue, rencontrera de E à D une raideur inversée mais de même valeur que de B à E.

Sur ce graphique, le point B correspondant au changement de raideur a été placé, pour la facilité de compréhension, très précisément à la position de suspension en charge du véhicule.

Dans la pratique, ce point B pourra, à la faveur de réglages lors de mise au point de la suspension, se situer différemment au-dessus ou au-dessous en B1 de cette position en ordre de marche de la suspension (voir la figure 7).

On peut notamment envisager une amélioration sensible du comportement routier du véhicule avec le réglage selon le mode de réalisation représenté à la figure 7.

Le point 3 est le point en ordre de marche de la suspension, X représente l'effort de compression et Y la course de suspension avec la butée de choc au point 4 et la butée de détente en 5. On observe que la course de suspension 1, utilisée sur un revêtement de qualité courante, se situe entièrement dans la zone de forte raideur 2. Cette configuration correspond à la technique utilisée sur les véhicules sportifs, véhicules réputés posséder un comportement qui privilégie la tenue de route au détriment du confort. Ces véhicules virent notamment sans prendre beaucoup de roulis et freinent ou accélèrent sans accuser de fortes variations d'assiette. En contre partie, leur suspension absorbe mal les irrégularités du relief.

Avec le procédé selon l'invention, on bénéficie de la même tenue en assiette du véhicule. Par contre, lorsqu'une roue de véhicule rencontre une bosse, la suspension quitte instantanément la zone de forte raideur pour fonctionner en raideur habituelle de confort, ce qui permet au véhicule de conserver un niveau de confort jusqu'ici incompatible avec le niveau de qualité observe sur le comportement routier.

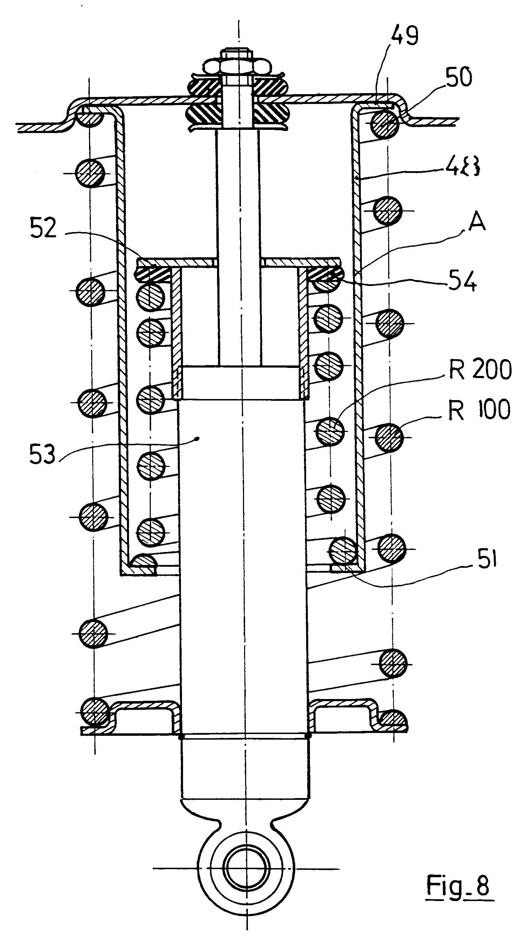

**EXEMPLE DE REALISATION AVEC DEUX RESSORTS INSTALLES CONCENTRIQUEMENT AUTOUR DE L'AMORTISSEUR (voir la figure 8).**

Ce montage présente l'intérêt de ne pas nécessiter de profonde intervention sur la structure du véhicule.

On observe sur **la figure 8** que les deux ressorts sont en compression l'un sur l'autre par l'intermédiaire de la pièce tubulaire 48 dont un des appuis 49 est prisonnier entre l'extrêmité supérieure 50 du ressort principal R100 et son appui sur le châssis, tandis que l'autre appui intérieur 51 de cette même pièce tubulaire 48 porte le ressort auxiliaire R200. Une coupelle 52 fixée sur le corps de l'amortisseur 53, vient s'appuyer sur le ressort auxiliaire R200 lors de la course de détente de la suspension. Cet appui se fait par l'intermédiaire d'une cale

6

en élastomère 54 destinée à éviter le bruit qui pourrait être engendré lors de la mise en contact du ressort auxiliaire R200 et de la coupelle 52.

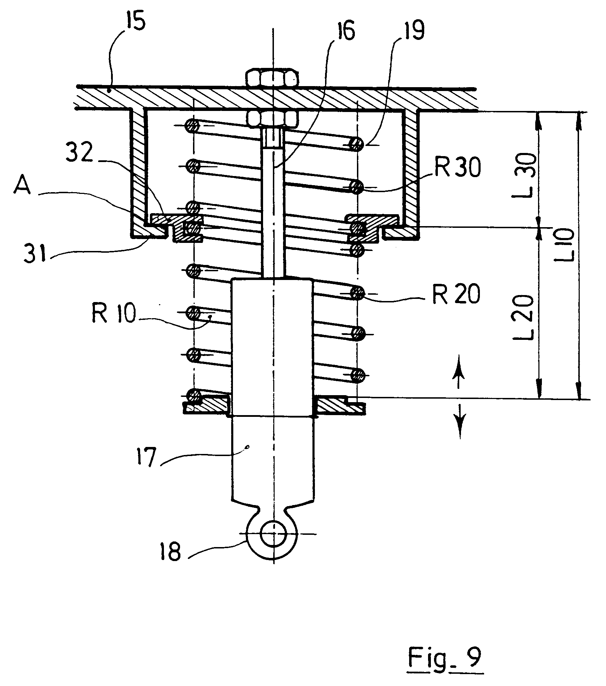

**EXEMPLE DE REALISATION DU MEME FONCTIONNEMENT OU UN SEUL RESSORT EST SOLLICITE AU NIVEAU D'UNE SPIRE DE SA PARTIE CENTRALE (voir la figure 9).**

La figure 9 met en évidence un montage pour un seul ressort R10 qui permet de réaliser une suspension selon l'invention.

Une coupelle d'appui 32 est fixée sur une des spires centrales du ressort, ce qui permet de distinguer la partie supérieure R30 du ressort au-dessus de la coupelle et l'autre partie R20 de ce même ressort au-dessous de la coupelle. La partie R30 du ressort R10 est enfermée dans la chambre 19 et sous contrainte entre deux appuis, tous deux solidaires du châssis 15 du véhicule . La partie R20 du même ressort R10 est positionnée entre la coupelle 32 et une autre coupelle solidaire du corps d'amortisseur 17, lui-même solidaire à l'extrémité 18 de la roue du véhicule. Cette partie R20 du ressort assure la sustentation du véhicule en recevant la poussée de la roue et en s'appuyant sur la coupelle C tenue en place par la poussée engendrée par la compression de la partie R30 du ressort ; cette dernière compression étant supérieure à celle de la partie R20 lorsque le véhicule est naturellement sur ses roues.

En position voisine de celle en ordre de marche, la partie du ressort R30 (L30) est "enfermée" et sous contrainte, donc inactive.

Entre cette position et la position roue pendante de la suspension, seule la partie L20 du ressort R20 est mise à contribution, d'où une forte raideur.

Entre cette position et la compression complète de la suspension, la coupelle d'appui 32, solidaire du ressort R10, quitte son appui en 32 et la totalité L10 du ressort R10 est mise à contribution ce qui se traduit par une raideur amoindrie.

On observe donc une courbe de flexibilité à deux pentes avec la plus grande flexibilité entre la position en ordre de marche de la suspension et la position butée de compression.

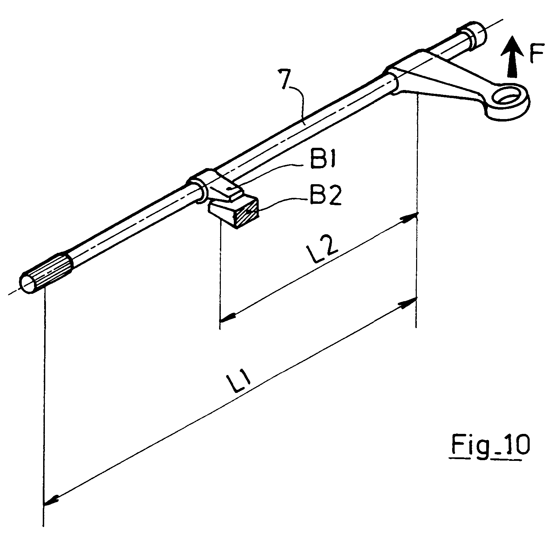

**EXEMPLE DE L'OBTENTION DU MEME FONCTIONNEMENT SELON UN AUTRE MODE DE REALISATION AVEC UNE BARRE DE TORSION (voir la figure 10).**

La barre de torsion est représentée dans une position voisine de la situation en ordre de marche de la suspension, la butée B1 solidaire de la barre est au contact de la butée B2 solidaire du châssis.

Si on comprime la suspension (sens de la flèche F), les deux butées B1, B2 se désolidarisent et on sollicite la barre de torsion 7 sur la totalité de sa longueur (L1). Si on déleste la suspension, les deux butées B1, B2 restent au contact et la barre de torsion 7 ne se détend que sur une partie (L2) de sa longueur.

On observe donc, comme avec les deux ressorts R1, R2, montés en opposition, une inflexion de la courbe de flexibilité au niveau du contact des butées B1, B2 ; la flexibilité la plus grande se situant entre la position en ordre de marche de la suspension et la position comprimée jusqu'aux butées de choc.

Pour parfaire le procédé, on peut asservir la position de la butée B2 sur châssis à la charge du véhicule, ce qui garantit le positionnement optimum du point d'inflexion des raideurs par rapport à l'assiette du véhicule roulant quel que soit son état de charge.

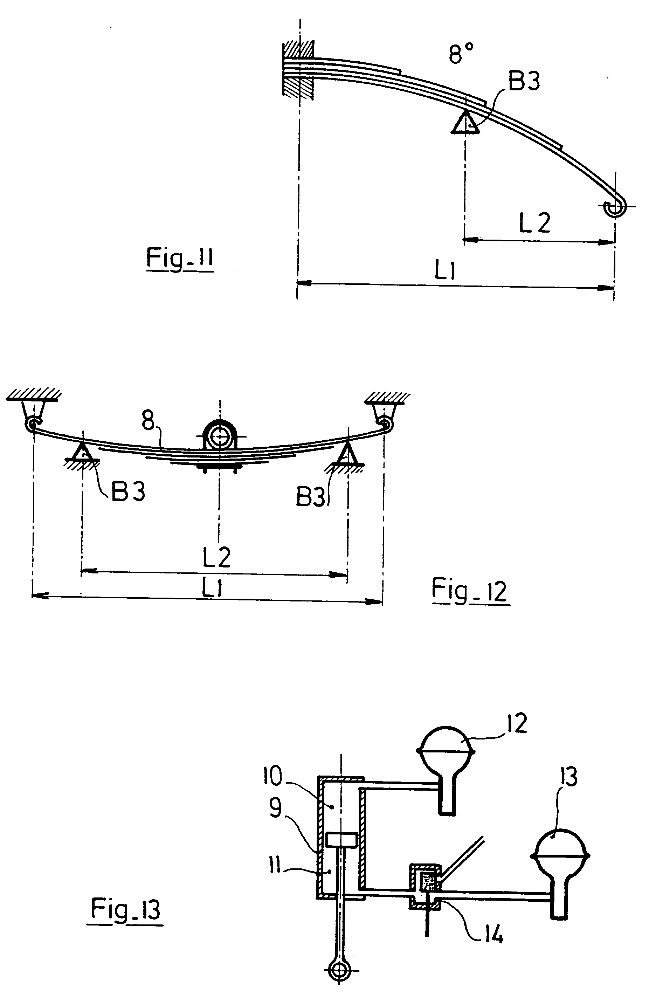

**EXEMPLE DE L'OBTENTION DU MEME FONCTIONNEMENT AVEC UN RESSORT A LAMES (voir les figures 11 et 12).**

Dans le même esprit qu'avec une barre de torsion, on peut, en plaçant une butée B3 à un endroit précis d'un ressort à lames 8, obtenir une courbe de raideur à double pente.

Comme pour la barre de torsion, la ou les butées B3 sont mises en contact pour une assiette voisine de l'assiette en ordre de marche du véhicule. Partant de cette position, on décolle les butées B3 et on sollicite la totalité de la longueur (L1) du ressort à lames 8 lors de l'enfoncement total de la suspension ; tandis qu'en course de détente, la présence d'une ou de plusieurs butées limite le fonctionnement sur la portion réduite L2 du ressort.

**EXEMPLE D'OBTENTION DU MEME FONCTIONNEMENT AVEC UNE SUSPENSION HYDRAULIQUE (voir la figure 13).**

L'effet est obtenu en utilisant un vérin à double effet 9 et en connectant chacune des chambres (supérieure 10 et inférieure 11) à une sphère de suspension 12, 13.

Une électrovanne 14 permet de faire entrer en action, ou pas, la sphère 13 connectée à la partie inférieure du vérin 9. Ladite sphère 13 engendre un effort antagoniste à celui de la sphère principale 12 qui assure la sustentation du véhicule. Cette électrovanne 14 peut alors être, dans la version la plus simple, asservie à la suspension.

Une version peut consister à piloter électroniquement l'électrovanne plus sophistiquée en fonction de différents paramètres saisis dans le fonctionnement du véhicule.

Ceci se traduit par la maîtrise permanente de la pression dans la chambre inférieure 11 du vérin 9.

L'aspect foncièrement novateur de la suspension selon l'invention réside dans l'utilisation de deux raideurs, lors du débattement de la roue du véhicule : deux raideurs positionnées avec une extrême rigueur sur la course de la suspension. Ces deux raideurs, représentées graphiquement dans les figures 5, 6, 7, se présentent sous la forme d'une courbe exprimée par deux pentes consécutives, liées entre elles par un point d'inflexion (voir la figure 7).

Le point d'inflexion se situe d'une façon générale dans les environs tous proches de la position en ordre de marche du véhicule. Sa position est déterminante dans le bon fonctionnement de la suspension selon l'invention. Ceci a été vérifié sur les quelques réalisations déjà effectuées sur des véhicules d'essai. La mise au point a également permis de vérifier que la raideur la plus élevée se situant entre la position en ordre de marche" et la position "roues pendantes" doit être d'une valeur au moins trois fois supérieure à celle de la raideur observée lors de l'enfoncement de la roue, jusqu'à la butée de choc. Les valeurs des deux raideurs se situent dans un rapport d'au moins trois à un. Sur deux véhicules équipés de suspensions selon l'invention à un niveau de mise au point considéré comme déjà très satisfaisant, les chiffres suivants ont été obtenus :

I - Sur un petit coupé sportif du style "GTI", pesant approximativement 890 kg, en ordre de marche, selon une répartition AV/AR de l'ordre de 525 kg sur avant / 365 kg sur arrière, les raideurs de suspension s'établissaient à :

| RAIDEUR | SUSPENSION AVANT (par roue) | SUSPENSION ARRIERE (par roue) |
|---|---|---|
| Course choc | 1,43 kg/mm | 1,55 kg/mm |
| Course détente | 4,70 kg/mm | 6,09 kg/mm |
| Rapport | 3,29 | 3,93 |
| | ==== | ==== |

II - Sur une grosse berline bien motorisée, pesant approximativement 1.350 kg, en ordre de marche, selon une répartition AV/AR de l'ordre de 800 kg sur avant / 550 kg sur arrière, les raideurs de suspension s'établissaient à :

| RAIDEUR | SUSPENSION AVANT (par roue) | SUSPENSION ARRIERE (par roue) |
|---|---|---|
| Course choc | 2 kg/mm | 2,13 kg/mm |
| Course détente | 7 kg/mm | 6,66 kg/mm |
| Rapport | 3,5 | 3,12 |
| | === | ==== |

Différents systèmes, principalement mécaniques, mais pouvant également mettre en oeuvre de l'hydraulique et de l'électronique, sont cités dans le descriptif de l'invention. Le premier cité fait appel à deux ressorts en opposition. Il a l'avantage d'isoler les paramètres en terme de raideur, rendant ainsi la mise au point plus aisée. Les premières réalisations ont été ainsi faites, mais, d'ores et déjà, il est permis de penser que les réalisations industrielles feront appel à des mises en oeuvre de ressorts beaucoup plus simples sans sortir du cadre des revendications.

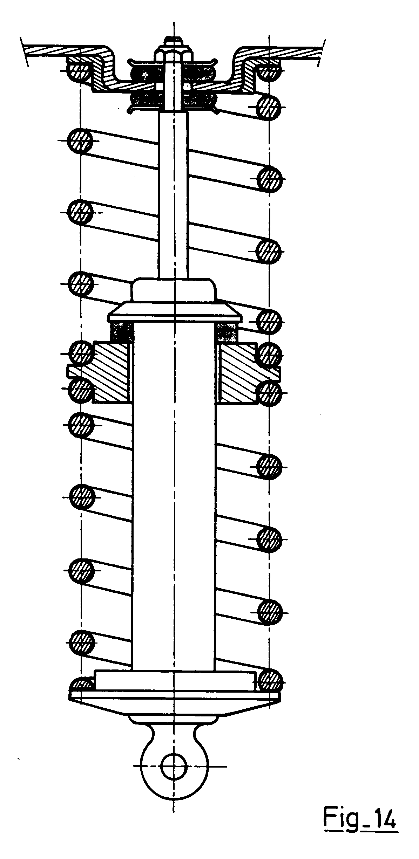

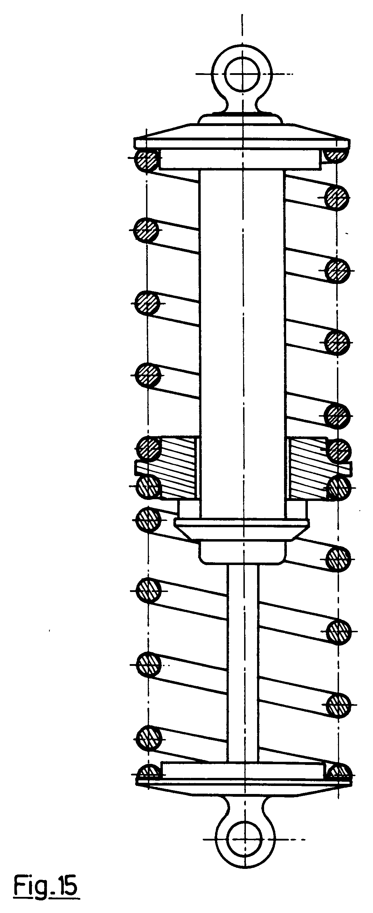

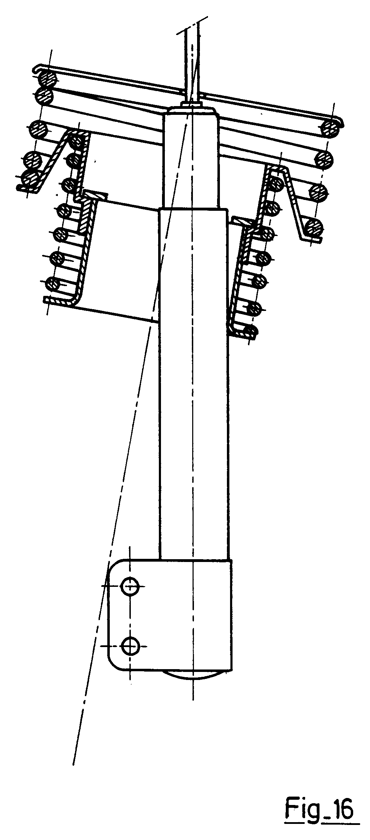

Les figures 14, 15 et 16 mettent en évidence le remplacement d'un seul ressort, tel que représenté à la figure 9, par deux ressorts montés en série avec une coupelle flottante. On obtient une longueur totale L10 de l'ensemble, une longueur L20 pour un ressort et une autre longueur L30 par l'autre ressort monté en série.

REFERENCES

| | |
|---|---|
| 1. | course de suspension |
| 2. | zone de forte raideur |
| 3. | point du véhicule en charge |
| 4. | butée de choc |
| 5. | butée de détente |
| 6. | point de contact |
| 7. | barre de torsion |
| 8. | ressort à lames |
| 9. | verin à double effet |
| 10. | chambre supérieure |
| 11. | Chambre inférieure |
| 12. | sphère de suspension |
| 13. | sphère de suspension |
| 14. | électrovanne |
| 15. | châssis |
| 16. | tige de l'amortisseur |
| 17. | corps d'amortisseur |
| 18. | extrêmité de l'amortisseur |
| 19. | chambre |
| 31. | appui inférieur sur châssis |
| 32. | coupelle d'appui |
| 48. | pièce tubulaire |
| 49. | appui |
| 50. | extrêmité du ressort principal |
| 51. | appui intérieur |
| 52. | coupelle |
| 53. | amortisseur |
| 54. | cale en élastomère |
| L1, L2, L3 : | |
| L10, L20 : | |
| R1. | ressort |
| R2. | ressort |
| R10. | ressort |
| R20. | partie du ressort R10 |
| R30. | partie du ressort R10 |
| R100. | ressort principal |
| R200. | ressort auxiliaire |
| B1. | butée |
| B2. | butée |
| B3. | butée |

**Revendications**

1. Suspension de roue de véhicule utilisant plusieurs éléments élastiques (R100,R200;12,13) montés en opposition ou non l'un par rapport à l'autre ou un seul élément élastique (R10;7;8) avec au moins une butée (32,B2,B3) limitant le fonctionnement sur une seule portion dudit élément, ladite suspension utilisant deux raideurs distinctes lors du débattement complet de la roue du véhicule de part et d'autre de la position en ordre de marche de la suspension, le point d'inflexion entre les deux raideurs étant localisé au voisinage de la position en ordre de marche de la suspension, ladite utilisation des raideurs différentes s'effectuant en dynamique, caractérisé en ce que :

- la raideur se trouvant entre la position en ordre de marche et la position roue pendante est d'une valeur au moins trois fois supérieure à celle de la raideur observée lors de l'enfoncement de la roue jusqu'à la butée de choc.

2. Suspension selon la revendication 1 caractérisé par le fait

que dans le cas d'un élément élastique unique (R10), on utilise une butée/coupelle (32) à un endroit précis dudit ressort (R10), de manière à obtenir une courbe de raideur à double pente, la ou les butées (32) sont mises en contact pour une assiette correspondant au véhicule en ordre de marche, ceci de manière à ce que, partant de cette position, on décolle les butées et on sollicite la totalité (R20+R30) du ressort hélicoïdal (R10) lors de l'enfoncement total de la suspension, tandis qu'en course de détente, la présence d'une butée (32) limite le fonctionnement sur la portion réduite (R20) dudit ressort hélicoïdal (R10).

3. Suspension selon la revendication 2 caractérisé par le fait

que dans le cas de l'utilisation d'un ressort unique (R10) une coupelle d'appui (32) est fixée au niveau des spires centrales du ressort, ce qui permet de distinguer la partie supérieure (R30) du ressort au-dessus de la coupelle et l'autre partie (R20) de ce même ressort au-dessous de la coupelle ; la partie (R30) du ressort (R10) est enfermée dans la chambre (19) et sous contrainte entre deux appuis, tous deux solidaires du châssis (15) du véhicule ; la partie (R20) du même ressort (R10) est positionnée entre la coupelle (32) et une autre coupelle solidaire du corps d'amortisseur (17), lui-même solidaire à l'extremité (18) de la roue du véhicule ; cette partie (R20) du ressort assure la sustentation du véhicule en recevant la poussée de la roue et en s'appuyant sur la coupelle (32) tenue en place par la poussée engendrée par la compression de la partie (R30) du ressort.

4. Suspension selon la revendication 1 caractérisée par le fait

que, dans le cas où l'élément élastique est une barre de torsion (7), celle-ci comporte une butée solidaire (B1) de ladite barre de torsion (7) qui est mise en contact avec une butée (B2) solidaire du châssis et ce de manière à ce que, si on comprise la suspension, les deux butées (B1, B2) se désolidarisent ou sollicitent la barre de torsion (7) sur la totalité de sa longueur (L1) ; si on déleste la suspension, les deux butées (B1, B2) restent en contact et la barre de torsion (7) ne se détend que sur une partie de sa longueur (L2).

5. Suspension selon la revendication 4 caractérisé par le fait

que la position de la butée (B2) sur châssis est asservie à la charge du véhicule, ce qui garantit le positionnement optimum du point d'inflexion des raideurs par rapport à l'assiette du véhicule roulant quel que soit son état de charge.

6. Suspension selon la revendication 1, caractérisé par le fait

que dans le cas où l'élément élastique est un unique ressort à lames (8), celui-ci comporte au moins une butée (B3) placée de manière à s'opposer à la détente du ressort à lames (8), de manière à obtenir une courbe de raideur à double pente et que la ou les butées (B3) sont mises en contact pour une assiette en ordre de marche, ceci de manière à ce que, partant de cette position, on décolle les butées (B3) et on sollicite la totalité (L1) du ressort à lames (8) lors de l'enfoncement total de la suspension ; tandis qu'en course de détente, la présence d'une ou de plusieurs butées limite le fonctionnement sur la portion réduite (L2) dudit ressort à lames (8).

7. Suspension selon la revendication 1, caractérisé par le fait

qu'il comporte un vérin à double effet (9) dont la chambre supérieure (10) est connectée à une sphère principale de suspension (12) et la chambre inférieure (11) est connectée à une sphère antagoniste (13) ; une électronvanne (14) permet de faire entrer en action, ou pas, la sphère (13) connectée à la partie inférieure du vérin (9) ; la dite sphère (13) engendre un effort antagoniste à celui de la sphère principale (12) qui assure la sustentation du véhicule.

8. Suspension selon la revendication 7 caractérisé par le fait

que l'électrovanne (14) est pilotée en fonction de différents paramètres saisis dans le fonctionnement du véhicule ; ceci se traduit par la maîtrise permanente de la pression dans la chambre inférieure (11) du vérin (9).

EP 0 446 338 B1

**Patentansprüche**

1. Aufhängung eines Fahrzeugrads mit mehreren Federelementen (R100, R200; 12, 13), die einander gegenüberliegend oder nicht gegenüberliegend eingebaut werden, oder einem einzelnen Federelement (R10; 7; 8) mit mindestens einem Anschlag (32, B2, B3), der die Funktion auf einen einzigen Abschnitt des genannten Elements begrenzt, wobei die genannte Aufhängung beim vollständigen Durchfedern des Fahrzeugrads nach beiden Seiten von der normalen Betriebsstellung der Aufhängung über zwei verschiedene Federhärten verfügt, wobei der Inflexionspunkt zwischen den beiden Federhärten in der Nähe der normalen Betriebsstellung der Aufhängung lokalisiert wird und die Anwendung der verschiedenen Federhärten dynamisch erfolgt,
dadurch gekennzeichnet, daß die Federhärte zwischen der normalen Betriebsstellung und der Stellung bei herabhängendem Rad mindestens dreimal größer ist als die Federhärte beim Einfedern des Rads bis zum Stoßanschlag.

2. Aufhängung nach Anspruch 1,
dadurch gekennzeichnet, daß bei einem einzelnen Federelement (R10) an einer bestimmten Stelle der genannten Feder (R10) ein Federteller/Anschlag (32) verwendet wird, so daß eine Härtekurve mit zweifacher Flanke erzielt wird, der oder die Anschläge (32) für eine dem Fahrzeug in Betriebsbereitschaft entsprechende Lage in Kontakt gebracht werden, und zwar dergestalt, daß ausgehend von dieser Stellung die Anschläge abgehoben werden und die Gesamtheit (R20 + R30) der Schraubenfeder (R10) beim vollständigen Einfedern der Aufhängung belastet wird, während beim Entspannen das Vorhandensein eines Anschlags (32) die Funktion auf den verringerten Abschnitt (R20) der genannten Schraubenfeder (R10) begrenzt.

3. Aufhängung nach Anspruch 2,
dadurch gekennzeichnet, daß bei Verwendung einer einzelnen Feder (R10) ein Federteller (32) im Bereich der mittleren Windungen der Feder angebracht ist, wodurch der obere Teil (R30) der Feder oberhalb des Federtellers und der andere Teil (R20) der gleichen Feder unterhalb des Federtellers unterschieden werden können; der Teil (R30) der Feder (R10) in der Kammer (19) eingeschlossen und unter Spannung zwischen zwei Auflagen ist, die beide fest mit dem Gestell (15) des Fahrzeugs verbunden sind; der Teil (R20) der gleichen Feder (R10) sich zwischen dem Federteller (32) und einem anderen Federteller befindet, der mit dem Stoßdämpferkörper (17) fest verbunden ist, der seinerseits am Ende (18) mit dem Fahrzeugrad fest verbunden ist; dieser Teil (R20) der Feder gewährleistet das Abstützen des Fahrzeugs, indem es den Stoß des Rads aufnimmt und sich auf den Federteller (32) abstützt, der durch den Schub in seiner Stellung gehalten wird, den das Zusammendrücken des Teils (R30) der Feder verursacht.

4. Aufhängung nach Anspruch 1,
dadurch gekennzeichnet, daß bei einer Drehstabfeder (7) als Federelement diese einen mit der genannten Drehstabfeder (7) fest verbundenen Anschlag (B1) enthält, der in Kontakt mit einem mit dem Gestell fest verbundenen Anschlag (B2) kommt, und zwar dergestalt, daß, wenn die Aufhängung zusammengedrückt wird, die beiden Anschläge (B1, B2) sich trennen oder die Drehstabfeder (7) über ihre gesamte Länge (L1) belasten; wenn die Aufhängung entlastet wird, die beiden Anschläge (B1, B2) in Berührung bleiben und die Drehstabfeder (7) sich nur über einen Teil ihrer Länge (L2) entspannt.

5. Aufhängung nach Anspruch 4,
dadurch gekennzeichnet, daß die Position des Anschlags (B2) am Gestell von der Belastung des Fahrzeugs abhängt, wodurch das optimale Positionieren des Inflexionspunkts der Federhärten bezogen auf die Lage des sich bewegenden Fahrzeugs unabhängig von seinem Belastungszustand gewährleistet wird.

6. Aufhängung nach Anspruch 1,
dadurch gekennzeichnet, daß bei einer einzelnen Blattfeder (8) als Federelement diese mindestens einen Anschlag (B3) enthält, der so angeordnet ist, daß er der Entspannung der Blattfeder (8) dergestalt entgegenwirkt, daß eine Härtekurve mit doppelter Flanke erzielt wird und daß der oder die Anschläge (B3) bei einer Lage in Betriebsbereitschaft in Kontakt gebracht werden, und zwar in einer Weise, daß ausgehend von dieser Stellung die Anschläge (B3) abgehoben werden und die Gesamtheit (L1) der Blattfeder (8) beim vollständigen Einfedern der Aufhängung belastet wird; während beim Entspannen ein oder mehrere vorhandene Anschläge die Funktion auf den verringerten Abschnitt (L2) der genannten Blattfeder

11

(8) begrenzen.

7. Aufhängung nach Anspruch 1,
dadurch gekennzeichnet, daß sie einen doppeltwirkenden Zylinder (9) enthält, dessen obere Kammer (10) mit einer Hauptaufhängungskugel (12) verbunden ist und dessen untere Kammer (11) mit einer gegenwirkenden Kugel (13) verbunden ist; ein Elektroventil (14) es ermöglicht, daß die mit dem unteren Teil des Zylinders (9) verbundene Kugel (13) zur Betätigung gebracht wird oder nicht; die genannte Kugel (13) eine Kraft ausübt, die der der Hauptkugel (12) entgegenwirkt, wodurch das Abstützen des Fahrzeugs gewährleistet ist.

8. Aufhängung nach Anspruch 7,
dadurch gekennzeichnet, daß das Elektroventil (14) in Abhängigkeit von verschiedenen Parametern gesteuert wird, die bei Betrieb des Fahrzeugs erfaßt werden, was sich in stete Steuern des Drucks in der unteren Kammer (11) des Zylinders (9) äußert.


## Claims

1. A vehicle wheel suspension comprising several spring elements (R100, R200; 12, 13) mounted opposite to each other or not or a single spring element (R10; 7; 8) with at least one stop (32, B2, B3) limiting the operation to one single portion of said element, said suspension utilizing two different spring stiffnesses for complete bottoming of the vehicle wheel on one side and the other from the normal operative position of the suspension, the inflection point between the two spring stiffnesses being located near the normal operative position of the suspension, said utilizing of different spring stiffnesses being realized dynamically,
characterized in that the spring stiffness between the normal operative position and the position with pendent wheel has a value at least three times that of the spring stiffness observed at maximum pressing-in of the wheel.

2. A suspension according to claim 1,
characterized in that in case of a single spring element (R10) a stop/spring plate (32) is used at a precise point of said spring (R10) so as to obtain a spring stiffness curve with double slope, the stop or stops (32) are brought into contact for a trim corresponding to the vehicle in normal operative position, in a way that, starting from this position, the stops are unstuck and the totality (R20 + R30) of the helical spring (R10) is charged during the complete pressing-in of the suspension, while during release the presence of a stop (32) limits the operation to a limited portion (R20) of said helical spring (R10).

3. A suspension according to claim 2,
characterized in that in case of using a single spring (R10) a spring plate (32) is fixed at the level of the central spires of the spring, which allows to distinguish the superior portion (R30) of the spring above the spring plate and the other portion (R20) of the same spring beneath the spring plate; the portion (R30) of the spring (R10) is included in the chamber (19) and is in a state of tension between two supports, the two of them being firmly connected to the chassis (15) of the vehicle; the portion (R20) of the same spring (R10) is positioned between the spring plate (32) and another plate which is firmly connected to the shock absorber body (17), which in turn is firmly connected at its end (18) to the vehicle wheel; this portion (R20) of the spring guarantees sustaining of the vehicle by receiving the push from the wheel and by supporting itself on the spring plate (32) which is kept in place by the push created by the compression of the portion (R30) of the spring.

4. A suspension according to claim 1,
characterized in that in case the spring element is a torsion bar (7) it comprises a stop (B1) firmly connected to said torsion bar (7) which is brought into contact with a stop (B2) firmly connected to the chassis, so that when the suspension is compressed, the two stops (B1, B2) separate or charge the torsion bar (7) in its complete length (L1); when the suspension is released the two stops (B1, B2) remain in contact and the torsion bar (7) is released only in a portion (L2) of its length.

5. A suspension according to claim 4,
characterized in that the position of the stop (B2) at the chassis depends on the load of the vehicle, which garantees the optimum positioning of the inflection point of spring stiffnesses with respect to the trim of the rolling vehicle whatever its load may be.

6. A suspension according to claim 1,
characterized in that in case the spring element is a single laminated spring (8) it comprises at least one stop (B3) placed so as to oppose release of the laminated spring (8), to obtain a spring stiffness curve with double slope, and the stop or stops (B3) are brought into contact for a trim in normal operative position, in a way that, starting from this position, the stops (B3) are unstuck and the totality (L1) of the laminated spring (8) is charged during the complete pressing-in of the suspension, while during release the presence of one or several stops limits the operation to a limited portion (L2) of said laminated spring (8).

7. A suspension according to claim 1,
characterized in that it comprises a double action cylinder (9) whose upper chamber (10) is connected to a main suspension sphere (12) and whose lower chamber (11) is connected to an antagonistic sphere (13); an electrovalve (14) allows to put into action the sphere (13) which is connected to the lower portion of the thruster (9); said sphere (13) has an antagonistic effect with respect to that of the main sphere (12), whereby sustaining of the vehicle is ensured.

8. A suspension according to claim 7,
characterized in that the electrovalve (14) is controlled in dependence of various parameters detected in the vehicle in operation, which results in permanent control of pressure in the lower chamber (11) of the cylinder (9).

Fig.1

Fig.2

Fig_3

Zone de
Compression
du ressort 1

Zone commune de
compression des 2 ressorts

Interface des 2 ressorts

Zone de compression
du ressort 2

Effort ressort 1

Point d'équilibre

R

A

C

O

B

R

Course

Points de basculement
de la raideur de
l'ensemble

OC = OA_OB

Effort ressort 2

Fig_4

**Fig_5**

**Fig_6**

**Fig_7**

Fig. 8

Fig. 9

7

B1

B2

L2

L1

F

Fig. 10

Fig. 11

Fig. 12

Fig. 13

Fig_14

Fig.15

Fig_16

Fig. 17